# EUROPEAN PATENT APPLICATION

(11) **EP 2 413 001 A1**
(43) Date of publication of application: **01.02.2012**
(21) Application number: 11175175.6
(22) Date of filing: 25.07.2011
(51) Int. Cl.: F16F 9/06

(54) **Motorcycle fork assembly with improved oil drainage system.**

(30) Priority: 26.07.2010 IT AN20100124
(71) Applicant: Tenneco Marzocchi S.r.l., 40069 Zola Predosa (BO) (IT)
(72) Inventor: Pezzi, Enrico, 47023 CESENA (FC) (IT); Bolognini, Federico, 40100 BOLOGNA (BO) (IT); Frontali, Francesco, 40064 OZZANO DELL'EMILIA (BO) (IT); Olivieri, Gianluca, 41056 SAVIGNANO SUL PANARO (MO) (IT)
(74) Representative: Cutropia, Gianluigi

(57) **Abstract**

A fork assembly is disclosed, comprising an external tube (1) and an internal tube (2). A free piston (5) is arranged inside a cylindrical portion (30) joined with the external tube, in such a way to define an operation chamber (C4) that is maintained filled with oil. At least one hole (33) is obtained in the cylindrical portion (30) in order to allow for draining oil from the operation chamber (C4) to an auxiliary tank (C3) externally of said cylindrical portion (30).

## Description

The present patent application for industrial invention relates to a motorcycle fork assembly with improved oil drainage system.

As it is known, a fork assembly comprises an external tube and an internal tube mounted telescopically sliding inside the external tube. Generally, the upper end of the external tube is connected to the frame of the vehicle, whereas the lower end of the internal tube is connected to an axle of a wheel of the vehicle, or vice versa. Between the internal tube and the external tube a shock-absorbing system with oil chambers is generated.

Such a type of fork assembly comprises a cylinder joined with the external tube where in a free piston slides, generating an operation chamber filled with oil. During compression of the fork assembly, leaks can be generated from the sealing systems and oil from outside is poured in the operation chamber.

When the oil level in the operation chamber exceeds a certain value, the operation of the fork assembly is impaired, and it is therefore necessary to drain oil from the operation chamber.

The purpose of the present invention is to eliminate the drawbacks of the prior art by devising a fork assembly provided with oil drainage system that is efficient, efficacious, reliable, inexpensive and simple to make.

Said purpose is achieved according to the present invention, with the characteristics listed in the enclosed independent claim 1.

Advantageous embodiments appear from the dependent claims.

The motorcycle fork assembly of the present invention comprises:
- an external tube,
- an internal tube mounted telescopically sliding inside the external tube,
- a cylinder joined with the external tube and axially arranged inside the external tube,
- a stem joined with the internal tube and provided with a piston fluid-tightly sliding inside said cylinder, in such a way to define a lower oil chamber and a higher oil chamber,
- an auxiliary tank of oil generated outside said cylinder in communication with said lower oil chamber by means of valve means,
- an upper cylindrical portion of said cylinder provided with a base and a valve that allows for oil passage from the upper chamber to an operation chamber in the upper cylindrical portion,
- a stem axially mounted in the upper cylindrical portion,
- a free piston that fluid-tightly slides on the stem with the internal surface of the upper cylindrical portion, in such a way to define said operation chamber and a gas chamber, and
- spring means interposed between said free piston and an upper closing cap, in such a way to oppose the ascending travel of said free piston.

The upper cylindrical portion comprises at least one through hole that is crossed by the oil coming from said operation chamber in such a way to discharge oil from the operation chamber to said auxiliary tank.

The advantages of the fork assembly of the invention appear evident, being able to discharge oil from the operation chamber in a simple and effective way when the oil level reaches a predefined value.

Additional characteristics of the invention will appear more evident from the following detailed description that refers to merely illustrative, not limiting embodiments, illustrated in the enclosed drawings, wherein:
Fig. 1 is a partially interrupted cross-sectional view of a fork assembly according to the invention, in completely compressed position;
Fig. 2 is an enlarged view of the front of the fork assembly of Fig. 1, in extended position;
Fig. 3 is the same view as Fig. 2, showing the fork assembly in partially compressed position;
Fig. 4 is an enlarged view of the front of a fork assembly according to a second embodiment of the present invention, shown in extended position; and
Fig. 5 is an enlarged view of the fork assembly of Fig. 4, in compressed position.

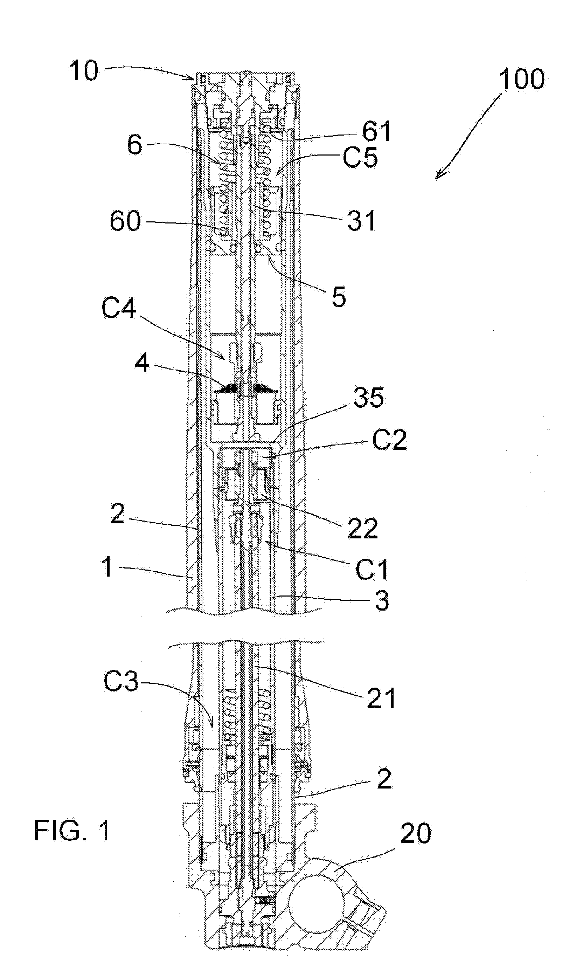

Referring to Figs. 1-3 a first embodiment of a fork assembly is disclosed, generally indicated with numeral (100).

Referring to Fig. 1, the fork assembly (100) comprises an external tube (1) and an internal tube (2) mounted telescopically sliding inside the external tube (1).

The external tube (1) is provided with upper end tightly closed by an upper closing cap (10) and lower open end from which the lower part of the internal tube (2) protrudes. The internal tube (2) is provided with open end disposed inside the external tube (1) and lower closed end connected with a flange (20) adapted to be fixed to an axle of a wheel.

A cylinder (3) is joined with the upper part of the external part (1) and axially extends for the entire length of the external tube (1). The cylinder (3) has external diameter lower than the internal tube (2) in order to be axially received inside the internal tube (2).

A stem (21) is joined with the lower part of the internal tube (2) and has a lower diameter than the cylinder (3) in order to be received inside the cylinder (3). The stem (21) is provided at the upper end with a piston (22) that fluid-tightly sides inside the cylinder (3).

In this way, a lower chamber (C1) and an upper chamber (C2) are defined inside the cylinder (3) and separated by the piston (22). The lower and upper chambers (C1, C2) are filled with oil.

A valve system of known type is integrated into the piston (22) to allow for oil passage from the lower chamber (C1) to the upper chamber (C2) and vice versa, during compression and extension of the fork assembly.

Another set of valves of known type provides communication between the lower chamber (C1) of the cylinder (3) with an auxiliary tank (C3) generated outside the cylinder (3) between cylinder (3) and internal tube (2). The auxiliary tank (C3) contains oil that is necessary to fill the chambers (C1 and C2).

The cylinder (3) is provided with an upper cylindrical portion (30) with higher diameter. The upper cylindrical portion (30) is provided with a base (35) where a valve (4) is mounted. During compression of the fork assembly the valve (4) allows for oil passage from the upper chamber (C2) towards an operation chamber (C4) in the upper cylindrical portion (30) and prevents oil passage from the operation chamber (C4) to the upper chamber (C2). Instead, during extension of the fork assembly, oil flows again from chamber (C4) to chamber (C2) by means of the valve (4).

Inside the upper cylindrical portion (30) a stem (31) is axially mounted and joined to the cylindrical portion (30). A free piston (5) slides on the stem (31). The lateral walls of the free piston (5) fluid-tightly slide on the internal surface of the upper cylindrical wall (30). So, the operation chamber (C4), which receives oil, is defined between the valve (4) and the free piston (5). Instead, between the free piston (5) and the upper cap (10) an air or gas chamber (C5) is defined.

A helicoidal spring (6) is disposed around the stem (31) and positioned between free piston (5) and upper cap (10), in such a way to oppose the ascending travel of the free piston (5).

The helicoidal spring (6) is provided with a first end (60) stopped against a recessed housing of said free piston (5) and a second end (61) stopped against a recessed housing of a pusher (10).

During compression of the fork assembly, seals may be unable to ensure perfect seal, thus causing oil infiltrations inside the operation chamber (C4) and impairing the correct operation of the fork assembly.

In order to avoid such a problem, it is necessary to drain oil in excess in the operation chamber (C4), in such a way to restore the correct oil level in the operation chamber (C4).

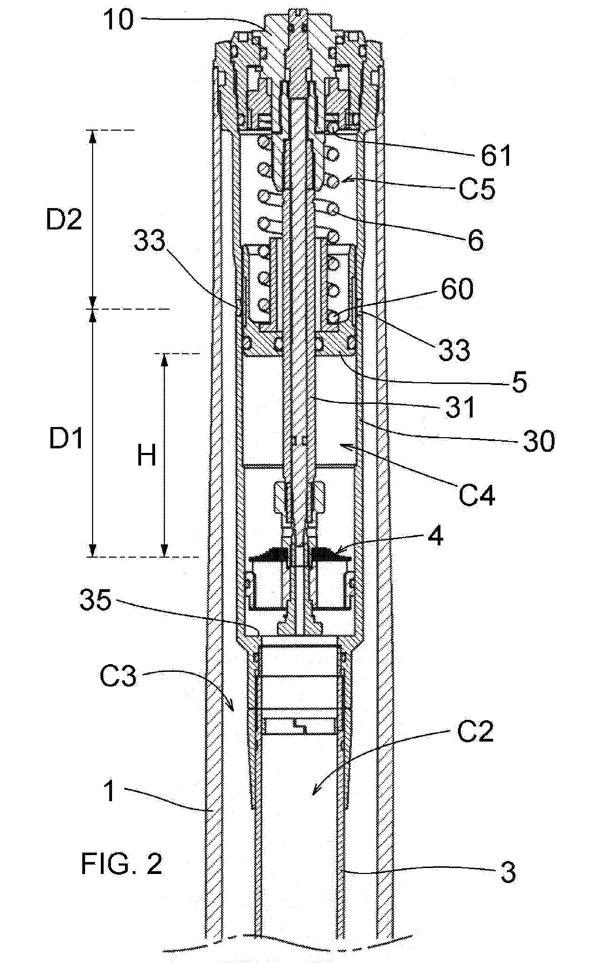

Referring to Fig. 2, such a problem is solved by providing at least one through hole (33) in the upper cylindrical portion (30). Preferably, two through holes (33) are obtained at the same level, in diametrally opposition directions.

The hole (33) is basically situated at intermediate height of the upper cylindrical portion (30). The distance (D1) between the centre of the hole (33) and the upper part of the valve (4) is slightly higher than the distance (D2) between the centre of the hole (33) and the lower part of the upper cap (10). For example, the distance (D1) can be approximately 60 mm and the distance (D2) can be approximately 75 mm.

Such values guarantee an excellent compromise between the level of the operation chamber (C4) that must be filled with oil and the level of the gas chamber (C5) that contains the compression spring (6).

As shown in Fig. 2, in normal conditions (i.e. when the fork assembly is in extended position), the free piston (5) covers the hole (33); the operation chamber (C4) is correctly filled with oil and has a level or height equal to (H), that is the distance between the lower surface of the free piston (5) and the upper surface of the valve (4). In such a case the level (H) of the operation chamber (C4) is lower than the distance (D1) between the centre of the hole (33) and the upper part of the valve (4).

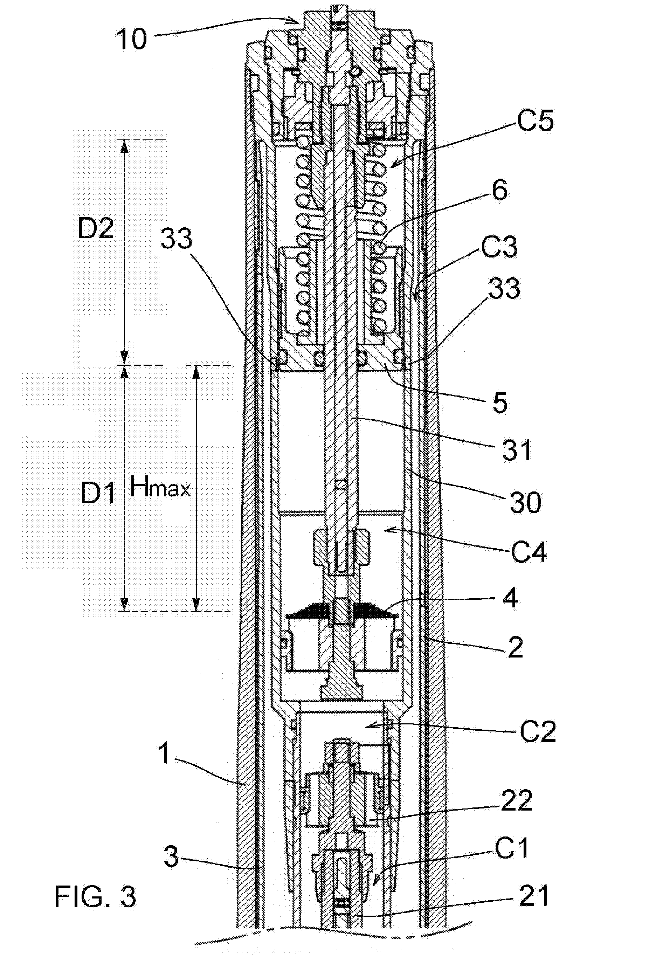

Referring to Fig. 3, when the fork is compressed, there may be oil pouring into the operation chamber (C4), therefore the level of the operation chamber rises until it reaches a maximum height (H_{MAX}) that exceeds the distance (D1) between the centre of the hole (33) and the upper part of the valve (4).

Consequently, the hole (33) is no longer covered by the free piston (5) and the oil contained in the operation chamber (C4) is discharged through the hole (33) in the auxiliary tank (C3). In view of the above, it is guaranteed that the level of the operation chamber (C4) does not exceed the maximum height (H_{MAX}), which is basically equal to the distance of the hole (D1), also during the compression of the fork assembly, preventing any oil infiltrations in the operation chamber (C4).

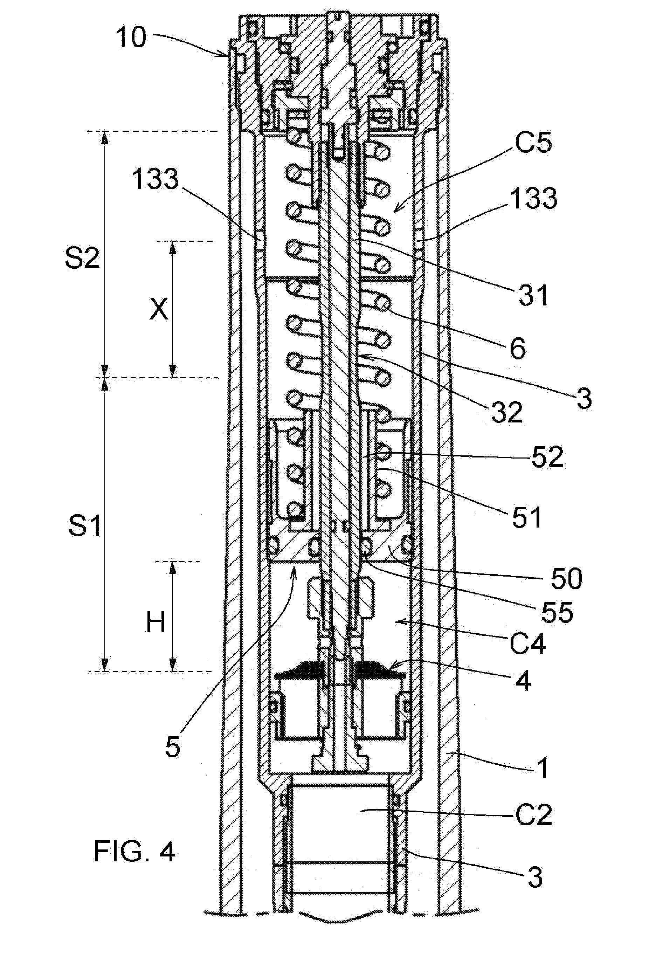

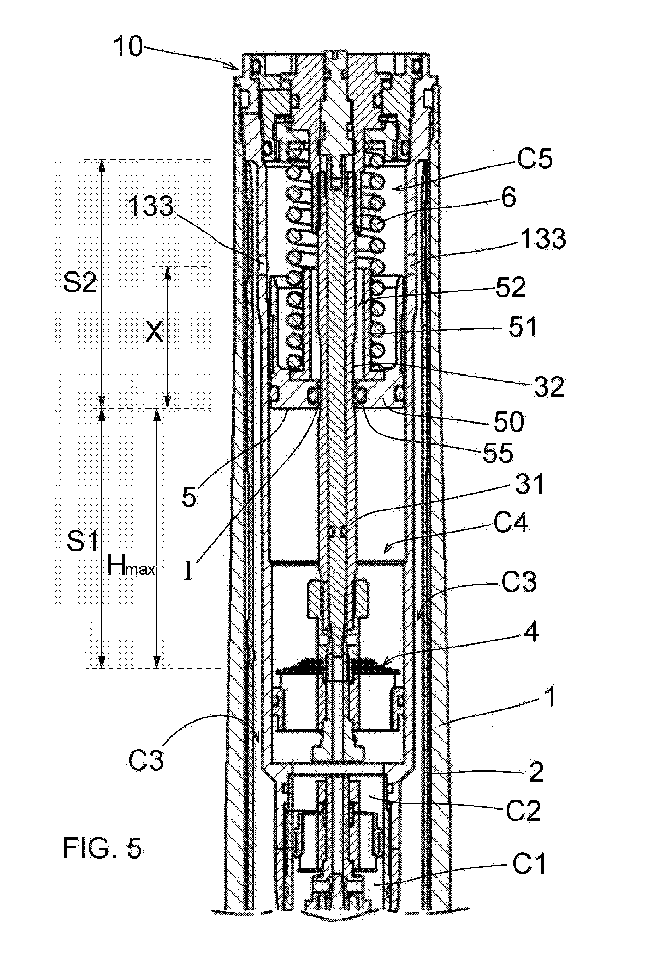

Figs. 4 and 5 illustrate a second embodiment of the invention, wherein the same elements or elements that correspond to the ones described above are indicated with the same numerals, omitting a detailed description.

According to this second embodiment, a bottleneck (32), that is a portion with lower diameter, is generated in an intermediate section of the stem (31). Exactly the distance (S1) between the lower part of the bottleneck (32) and the upper part of the valve (4) is slightly higher than the distance (S2) between the lower part of the bottleneck (32) and the lower wall of the upper cap (10).

For example, like in the first embodiment, the distance (S1) can be approximately 60 mm and the distance (S2) can be approximately 70 mm.

The free piston (5) has a base (50) with seal (55) that fluid-tightly slides on the external surface of the stem (31). On the base (50) of the free piston a sleeve (51) is mounted, having internal diameter higher than the diameter of the stem (31) in such a way to generate an air space (52) for oil passage.

At least one through hole (133) is obtained in the upper cylindrical portion (30). In such a case the hole (133) is no longer situated in an intermediate section of the cylindrical portion (30), but it is closer to the upper end of the cylindrical portion (30).

The distance (X) between the hole (133) and the lower part of the bottleneck (32) must be slightly higher than the height of the free piston (50). In such a way, as shown in Fig. 5, when the lower end of the free piston (5) has reached the bottleneck (32), the free piston does not cover the hole (133). In such a situation, between the bottleneck (32) and the seal (35) of the base of the free piston an air space (I) is generated, allowing for passage of oil contained in the operation chamber (C4). The oil passes through the air space (52) of the sleeve of the free piston and penetrates into the gas chamber (C5). Therefore, the oil contained in the gas chamber (C5) comes out through the holes (133) and reaches the auxiliary tank (C3).

Also with this second embodiment of the invention, it is guaranteed that during compression the maximum oil level (H_{MAX}) in the operation chamber (C4) does not exceed a predefined value that corresponds to the height (S1) of the lower part of the bottleneck (32).

Numerous variations and modifications can be made to the present embodiments of the invention by an expert of the field, while still falling within the scope of the invention as claimed in the enclosed claims.

## Claims

1. Motorcycle fork assembly comprising:
- an external tube (1),
- an internal tube (2) mounted telescopically sliding inside the external tube (1),
- a cylinder (3) joined with the external tube (1) and axially arranged inside the external tube,
- a stem (21) joined with the internal tube (2) and provided with a piston (22) fluid-tightly sliding inside said cylinder (3) in such a way to define a lower oil chamber (C1) and an upper oil chamber (C2),
- an auxiliary tank (C3) of oil generated outside said cylinder (3) in communication with said lower oil chamber (C1) by means of valve means,
- an upper cylindrical portion (30) of said cylinder (3) provided with a base (35) and a valve (4) that allows for oil passage from the upper chamber (C2) to an operation chamber (C3) in the upper cylindrical portion (30),
- a stem (31) axially mounted in the upper cylindrical portion (30),
- a free piston (5) that fluid-tightly slides on the stem (31) with the internal surface of the upper cylindrical portion, in such a way to define said operation chamber (C4) and a gas chamber (C5),
- spring means (6) interposed between said free piston (5) and an upper closing cap (10) in such a way to oppose the ascending travel of said free piston (5),
**characterized in that**
said upper cylindrical portion (30) comprises at least one through hole (33; 133) that is crossed by the oil coming from said operation chamber (C4) in such a way to discharge oil from the operation chamber (C4) to said auxiliary tank (C3).

2. Fork assembly as claimed in claim 1, **characterized in that** said upper cylindrical part (30) comprises at least two through holes (33; 133) disposed at the same level in diametrally opposite positions.

3. Fork assembly as claimed in claim 1 or 2, **characterized in that** said at least one through hole (33) is disposed in intermediate portion of said cylindrical portion (30).

4. Fork assembly as claimed in claim 3, **characterized in that** the distance (D1) between the centre of the hole (33) and the upper part of the valve (4) is slightly higher than the distance (D2) between the centre of the hole (33) and the lower part of the upper cap (10).

5. Fork assembly as claimed in claim 4, **characterized in that** the distance (D1) between the centre of the hole (33) and the upper part of the valve (4) is approximately 60 mm and the distance (D2) between the centre of the hole (33) and the lower part of the upper cap (10) is approximately 75 mm.

6. Fork assembly as claimed in claim 1 or 2, **characterized in that** said at least one through hole (133) is disposed in an upper portion of said cylindrical portion (30) and said stem (31) has a bottleneck (32) disposed in intermediate position of the stem, in such a way that an air space (1) is generated between the bottleneck (32) and a seal (55) of the piston, allowing for oil passage from the operation chamber (C4) to the gas chamber (C5).

7. Fork assembly as claimed in claim 6, **characterized in that** it comprises a sleeve (51) joined with the piston (55) and arranged around the stem (32) with internal diameter higher than the diameter of the stem in such a way to generate an air space (52) for oil passage.

8. Fork assembly as claimed in claim 6 or 7, **characterized in that** the distance (X) between the lower part of said bottleneck (32) and the centre of said hole (133) is slightly higher than the height of said free piston (5).
